# EUROPEAN PATENT APPLICATION

(11) **EP 0 102 397 A1**
(43) Date of publication of application: **14.03.1984**
(21) Application number: 83900850.5
(22) Date of filing: 11.03.1983
(51) Int. Cl.: B60H 3/00

(54) **AIR CONDITIONING METHOD AND APPARATUS FOR VEHICLE**

(30) Priority: 12.03.1982 JP 37935/82
(71) Applicant: HITACHI, LTD., Chiyoda-ku, Tokyo 100 (JP); Hitachi Automotive Engineering Co., Ltd., Katsuta-shi Ibaraki 312 (JP)
(72) Inventor: Okada, Tsugihiro, Katsuta-shi Ibaraki 312 (JP); OHTSU, Eiichi, Katsuta-shi Ibaraki 312 (JP); AOKI, Takashi, Tochigi 322 (JP)
(74) Representative: Beetz & Partner Patentanwälte
(86) International application number: JP8300075
(87) International publication number: WO8303229

(57) **Abstract**

An air conditioning apparatus for a vehicle, which has cooling means such as an evaporator (131) and heating means such as a heater core (141) for controlling the quantity of heat received by air passing through both these means via a temperature control door (142). This apparatus has a controller (2) which inputs signals from a potentiometer (147) in a heat exchange unit (1), a passenger compartment temperature sensor (170), and an exhaust gas temperature sensor (160), and signals from a temperature setter (31) and a manual dehumidifying switch (32) of an operating unit (3), and a switch (33) of a diffuser (106). The controller (2) has an A/D converter (21), a microcomputer (22) and an interface circuit (23) operating the heat exchangers (131), (141) of the unit (1) and doors (111), (142), (151), (156), calculates the temperature difference PI between the compartment temperature and a target temperature to measure the quantity of heat required, and operates only the heating means when the air in the compartment requires heating and only the cooling means when the air in the compartment requires cooling. This apparatus automatically controls the temperature without any loss of continuity in the temperature control, and reduces the operating range of the cooling means to a large extent, thereby reducing the power consumption.

## Description

### Technical Field:

This invention relates to a method and apparatus for air conditioning for a car. More particularly, the present invention relates to a method and apparatus for air conditioning for a car which can automatically control a temperature without using unnecessary energy.

### Background Art:

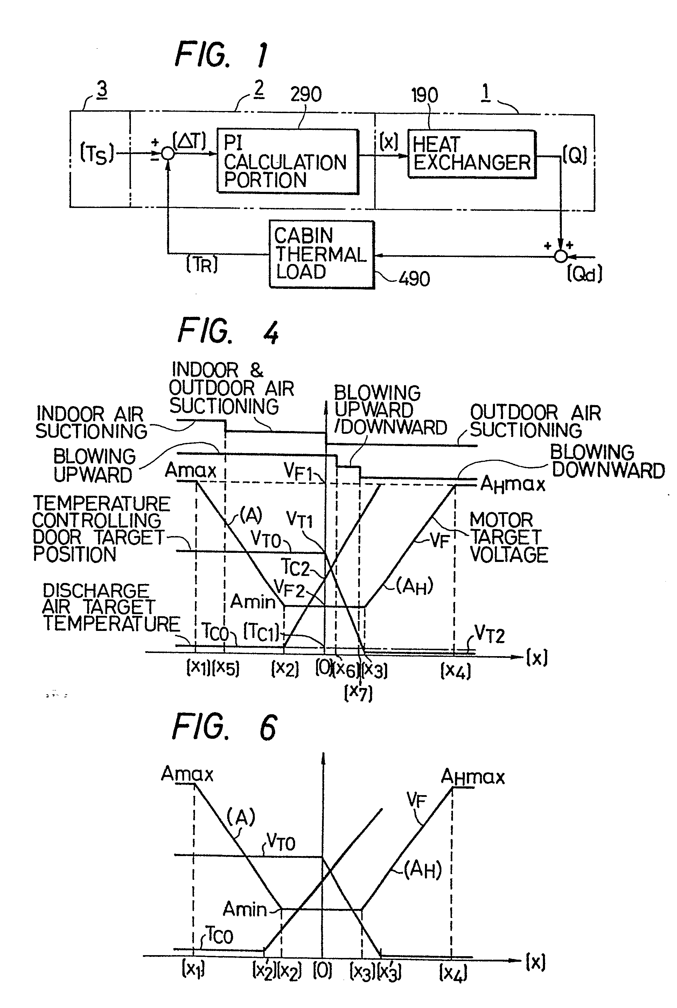

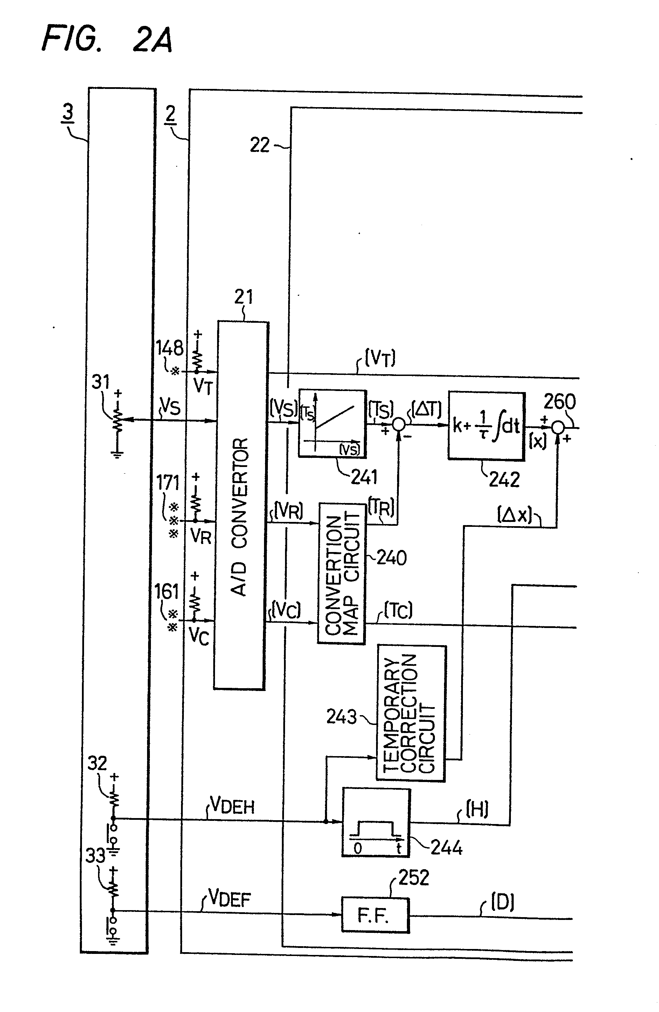

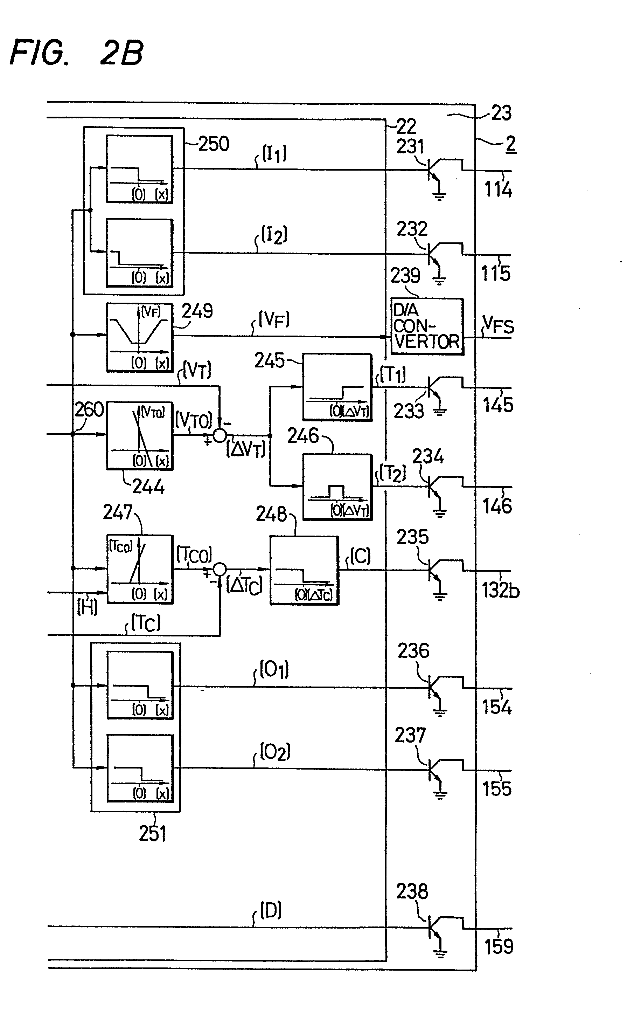

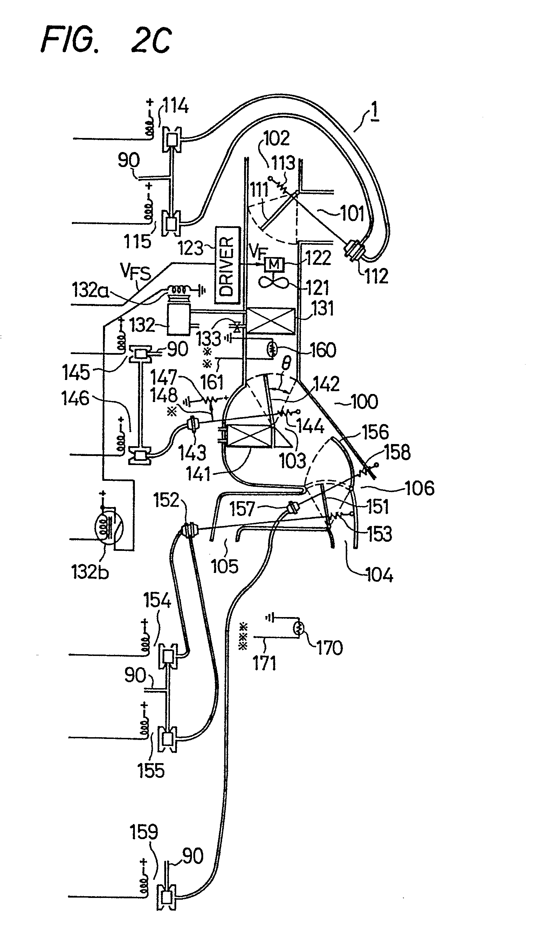

A reheat air mix type air conditioning apparatus, which is based on the premise that both heating means and cooling means are operated and is typically illustrated in Figures 1 and 2 of Japanese Patent Laid-Open No. 36166/1980, for example, has been used conventionally as an automatic temperature control type air conditioning apparatus for a car in order not to spoil the continuity of temperature control characteristics and to keep a dehumidifying operation. The air inside and outside the cabin of a car is once sent to a cooler by a blower and the flow rate of the air passing through a heater is then changed so as to adjust the heat radiation quantity into the cabin and to control the internal temperature of the car to a target temperature. In accordance with this system, the operation range of a cooling medium compressor is extremely wide and cooling means are operated until the internal temperature of the car reaches a low external temperature at which cooling or dehumidification is not necessary. Incidentally, about 80% of the power consumption of the air conditioning apparatus for a car is occupied by the cooling means or for driving the cooling medium compressor.

Thus, when examined in annual terms, the conventional air conditioning apparatus consumes unnecessarily great engine power.

### Disclosure of Invention:

The present invention is therefore directed to provide a method and apparatus for air conditioning for a car which can reduce power consumption without spoiling the continuity of temperature control.

The present invention contemplates to reduce the power consumption without spoiling the continuity of temperature control by letting only heating means operate when the internal air in the cabin requires heating and letting only cooling means operate when the internal air requires cooling. Brief Description of Drawings:
Figure 1 is a block diagram useful for explaining the principle of automatic temperature control in accordance with one embodiment of the present invention;
Figures 2A, 2B and 2C are partial block diagrams (the combination of which will be hereinafter simply referred to as Figure 2) showing the entire structure of one embodiment of the present invention;
Figures 3A and 3B are micro-computer program flow charts for the control portion shown in Figure 2;
Figure 4 is a diagram useful for explaining the operation of the heat exchange portion shown in Figure 2;
Figure 5 is a diagram showing the heat radiation quantity of the heat exchange portion into a cabin; ⁻
Figure 6 is another diagram useful for explaining the operation of the heat exchange portion shown in Figure 2; and
Figure 7 is a diagram showing the heat radiation quantity characteristics when the dehumidifying portion shown in Figure 2 is operating.

Best Mode for Carrying Out the Invention:
Preferred embodiments of the present invention will be described in detail with reference to the drawings.

Figure 1 is a block diagram useful for explaining the principle of automatic temperature control which is adopted in one embodiment of this invention shown in Figure 2. A target set temperature [Ts] set by an operation portion 3 is compared with an internal temperature [T_{R]} of a cabin and the temperature difference AT = T_{S} - T_{R} is subjected to PI calculation. The following equation is given with x representing the result of PI calculation:

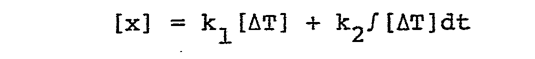

A PI calculation portion 290 is a technique generally used in the field of automatic control. It adds the proportional component of the difference between the target value and the actual value of the object of control to its cumulative component with time, and calculates a necessary quantity for shifting the object of control to the target state. The control portion 3 drives a heat exchanger 190 in the heat exchange portion 1 so that a calorie Q proportional to the value x as a result of calculation is sent into the cabin 2. The internal temperature of the cabin (thermal load 490) is affected also by disturbance heat Q_{D} besides the calorie Q described above. The disturbance heat Q_{D} includes incoming heat from outside the cabin, radiant heat by solar radiation, transmitted heat from the engine chamber, exothermy of passenger(s), and the like. The internal air inside the cabin receives heat of a calories Q + Q_{D} and the temperature [T_{R}] changes with primary delay. This [T_{R]} is negatively fed back to the control portion 3. It is mathematically evidenced that [T_{R}] stably converges to [Tₛ] provided that the coefficient of each element of this negative feedback system is appropriate. Hence, automatic temperature control can be accomplished.

One embodiment of the present invention will be described with reference to Figures 2A, 2B and 2C. When Figures 2A, 2B and 2C are combined in order named, the air conditioning apparatus for a car corresponding to one shown in Figure 1 can be' constituted. The portion represented by the same reference numeral in one drawing is connected to the portions represented by the same reference numeral in the other drawings without overlap.

The control portion 1 includes an external air suction port 101 for the air from outside the cabin and an internal air suction port 102 for sucking the internal air. A suction port door 111 is disposed in order to control opening and closing of these suction ports 101, 102. This suction port door 111 is controlled to three operating positions by a negative pressure actuator 112 of two-stage action type and a return spring 113. Each negative pressure operation chamber of this negative pressure actuator 112 is connected to a negative pressure source such as a negative pressure pump 90, not shown, through a respective electromagnetic valve 114, 115. When a current is not applied to both electromagnetic valves 114, 115, the suction port door 111 closes the internal air suction port 102 by means of the force of the return spring 113 so as to suck the external air and when the current is applied to both electromagnetic valves 114, 115, it closes the external air suction port 101 by means of the negative pressure force supplied into both negative pressure chambers of the negative pressure actuator 112 so as to suck the internal air. When the current is applied to the electromagnetic valve 114 but not to the electromagnetic valve 115, the negative pressure force acts upon only one of the negative pressure operation chambers of the negative pressure actuator 112, so that the suction port door 111 is positioned at the intermediate position between the two kinds of state described above and both external and internal air suction ports 101, 102 are opened. Hence, both external and internal air can be sucked.

The unit case 100 of the later-appearing heat exchange portion is equipped with a blower 121 for transferring the air from the suction ports to the heat exchange portion. The air flow rate of this blower 121 is controlled by controlling an impressed voltage applied to a motor 122 from a driver 123 which is controlled by the control portion 2. An evaporator 131 is disposed downstream of the blower 121 and forms a compression cooling cycle with its compressor 132, expansion valve 133, and the like, providing cooling means for the air passing therethrough.

The compressor 132 is driven by the engine of a car through an electromagnetic clutch 132a and its operation is controlled when the electromagnetic clutch 132a is excited or is not excited by a com- . pressor relay 132b which is controlled by the control signal from the control portion 2.

A heater core 141 as heating means is disposed downstream of the evaporator 131, and the cooling water (hot water) of the engine of the car circulates through this heater core 141 and heats the air passing through the heater core. A temperature controlling door 142 is disposed so as to control the heating quantity by increasing or decreasing the flow rate of the air passing through the heater core 141. This door 142 is rotated by a negative pressure actuator 143 connected to the afore- mentioned negative pressure source 90 through electromagnetic valves 145, 146 and a return spring 144. When the current is not applied to both electromagnetic valves 145, 146, the negative pressure force does not act because the negative pressure operation chambers of the negative pressure actuator 143 are communicated with the atmosphere through the electromagnetic valves 145, 146. Hence, the temperature controlling door 142 is rotated by the return spring 144 in the direction in which the angle e shown in Figure 2 decreases, that is, in the direction in which the air flow rate passing through the heater core 141 increases. When the current is applied to the electromagnetic valve 145 but not to the electromagnetic valve 146, the negative pressure operation chambers of the negative pressure actuator 141 are communicated with the negative pressure source through the electromagnetic valves 146, 145 and the negative pressure acts. As a result, the temperature controlling door 142 rotates in the direction in which 6 increases, against the force of the return spring 144. In other words, it operates in the direction in which the air flow rate passing through the heater core 141 descreases. A potentiometer 147, which operates in the interlocking arrangement with the temperature controlling door 142, applies a position signal corresponding to the position of the temperature controlling door to 148 of the control portion 2 in the form of a voltage V_{T} and as 8 increases, V_{T} rises.

According to the construction described above, the temperature controlling door 142 is subjected to feedback control and the air flow rate passing through the heater core 141 is controlled within the range of 0 to 100% of the blower flow rate A ' (from maximum to zero of 8) sent from the blower 121. The air that does not pass through the heater core 141 passes through a bypass 103 disposed in parallel with the heater core 141, is mixed with the heated air passing through the heater core 141 and is thereafter jetted into the cabin.

The air passing through the evaporator 131 and the heater core 141 or the bypass 103 is blown out into the cabin from upper and lower blow ports 104, 105 for the cabin or from a blow port 106 for front glass. A mode door 151 is disposed in order to select the blow ports for blowing the air into the cabin. This mode door 151 is also controlled to the three operating positions by a two-stage operation type negative pressure actuator 152 in the same way as the suction port door 111 described already. Two negative pressure operation chambers of the negative pressure actuator 152 are connected to the afore-mentioned negative pressure source 90 via electromagnetic valves 154 and 155, respectively. When the power is not applied to both electromagnetic valves 154, 155, the upper blow port 104 is closed by the return spring 153 and the air is blown out from the lower blow port 105. When the current is applied to both electromagnetic valves 154, 155, the negative pressure source 90 is connected to both negative pressure operation chambers. of the negative pressure actuator 152 and the mode door 151 closes the lower blow port 105 so that the air is blown out from the upper blow port 104. When the current is applied to the electromagnetic valve 154 but not to the electromagnetic valve 155, only one of the negative pressure chambers of the negative pressure actuator 152 is connected to the negative pressure source, so that the mode door 151 is positioned at the intermediate position between the two kinds of state described above. Accordingly, both upper and lower blow ports 104, 105 are open and the air enters a so-called "bilevel" state in which the air is blown out from both blow ports. The air blow port 106 to the front windbreak glass is opened and closed by the door 156. It is a customary construction in which a small quantity of air is discharged generally even if the door 156 is closed.

The door 156 is operated by a negative pressure actuator 157 connected to the negative pressure source via an electromagnetic valve 159 and by a return spring 158. When the current is applied to the electromagnetic valve 159, the negative pressure force acts upon the negative pressure actuator 157 and the deaf door 156 opens against the force of the return spring 158. When the curent is not applied to the electromagnetic valve 159, the door 156 is closed by the return spring 158.

A discharge air temperature sensor 160 consisting of a thermistor is disposed immediately downstream of the evaporator 131 in order to detect the air temperature immediately after passing through the evaporator 131, that is, the discharge air temperature T. The sensor 160 applies the discharge air temperature T to 161 of the control portion 2 in the form of a voltage V_{C}. A cabin temperature sensor 170 is fitted at a suitable position of the cabin and applies the cabin temperature T_{R} to 161 of the control portion 2 in the form of a voltage V_{R}.

The control portion 2 consists of an A/D convertor 21 which converts analog signals from the sensors described above and from the operation portion 3 into digital signals, a microcomputer for calculating the digital signals from this A/D convertor 21 and from the operation portion 3, and an interface circuit 23 which controls various instruments of the heat exchange portion 1 by use of the output signal from the micro-computer 22. The interface circuit 23 consists in turn of the electromagnetic valves 114, 115, 145, 146, 154, 155, 159 of the heat exchange portion 1, transistors 231 through 238 as switching elements for controlling the compressor relay 132b and a D/A convertor 239 for applying an analog voltage to the driver 123 which supplies the power to the motor 122.

The operation portion 3 consists of air conditioning switches for starting and stopping the apparatus of the present invention, not shown, the temperature setter 31 for setting the internal temperature of the cabin to a desired temperature, a dehumidifying switch for manually dehumidifying the inside of the cabin, a switch 33 for blowing out the air to the front glass from the low port 106, and the like. The desired temperature of the cabin (target set temperature T_{S}) set by the temperature setter described above is applied as a voltage V to the control portion 2, and the opera- ^{tion} signals ^{V}_{DEH} and ^{V}_{DEF} of the dehumidifying switch 32 and switch 33 are also applied to the control portion 2 in the form of voltage.

The operation of the automatic air conditioning apparatus of this embodiment having the construction described above will be now explained.

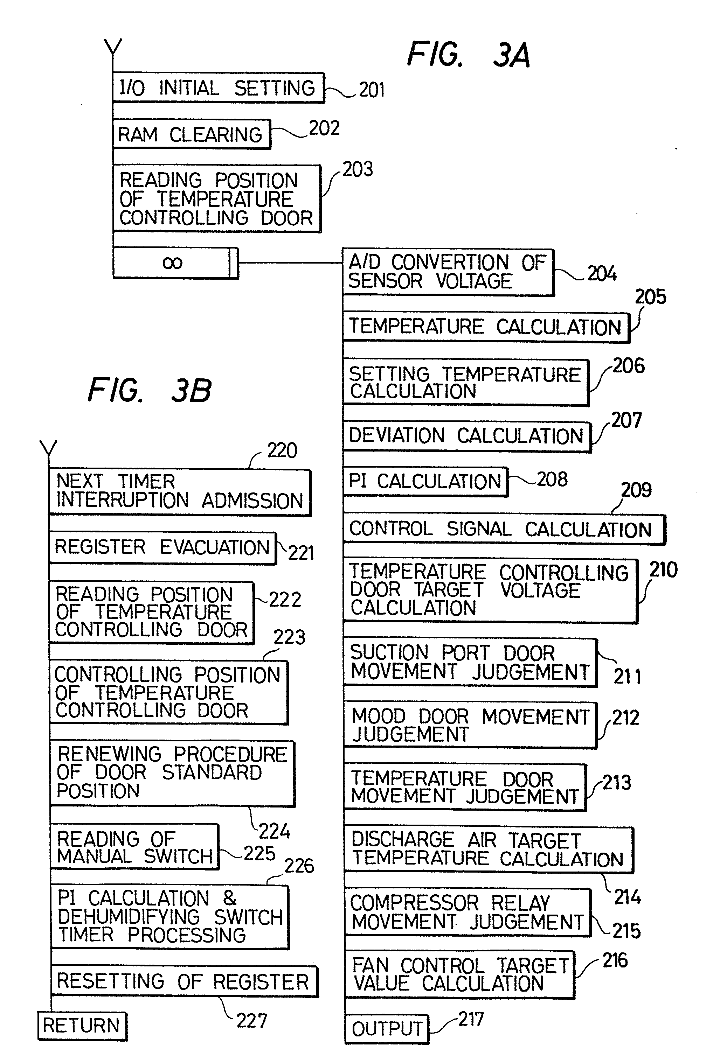

Figures 3A and 3B are operation flow charts of the micro-computer program of the control portion 2. The numerals in the drawings are step numbers representing the sequence of flow. As shown in the drawings, the operation of this apparatus consists of initialize steps of steps Nos. 201 through 203, a main routine in which the steps 204 through 207 are repeated an infinite number of times and an interruption routine in which steps 220 through 227 are processed in a period of one-hundreds (1/100 sec in this embodiment) of one period of the main routine (about 1 sec in this embodiment) in the main routine.

When the apparatus of the invention is first actuated by the air conditioning switch, the I/O data of the micro-computer 22 of the control portion 2 is set to the initial value which is determined by the step 201 and RAM inside the micro-computer 22, not shown, is cleared by the step 202. Next, the voltage V_{T} of the potentiometer 147 corresponding to the position (θ = 0) of the temperature controlling door 142 is converted to a digital quantity [V_{T}] at the step 203 and is read as the initial value of the door reference position. This door reference position signal is supervised and updated at the step 224 by the interruption routine.

Next, the main routine will be explained.

The voltage V corresponding to the target set temperature T set by the operation portion 3, the voltage V_{R} corresponding to the cabin temperature _{TR} and the voltage V_{c} corresponding to the discharge air temperature T_{C} are converted to the digital values [V_{S}], [V_{R}] and [V_{C}], respectively, by the A/D convertor 21 at the step 204 and are applied to the micro-computer 22. Read of the voltage V_{T} corresponding to the position of the temperature controlling door 142 is carried out on the basis of timer interruption as will be later described. The values [V_{R}] and [V_{c}] are converted to the digital values [T_{R}] and [T_{c}] corresponding to the cabin temperature and the discharge air temperature, respectively, by a conversion map circuit stored in ROM of the micro-computer 22 at the step 205.

At the step 206, [V_{S}] is converted to a digital vlaue [T_{S}] of the target set temperature in accordance with a primary conversion formula by the target set temperature circuit 241. At the step 207, the difference between the target set temperature [T_{S}] and the cabin temperature, that is, [ΔT] = [T_{S}] - [T_{R}], is determined.

Next, PI calculation, that is, [x] = k[AT] + 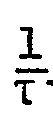 ∫[ΔT]dt, is effected by an integration addition circuit 242 at the step 208. The integration item of the formula above provides the control signal [x] as the temperature difference [AT] is added every predetermined time which is designated by the timer processing at the step 226 of the interruption routine and k(AT) is added to this integration item (step 209). In the formula above, k and _{T} are constants that are determined by the control system.

When the dehumidifying operation is effected by the dehumidifying switch 32, a temporary correction value [Ax] is added to the output of the integration addition circuit 242 by the output from a temporary correction circuit 243 as the final processing of the step 209 and a corrected value is obtained. This dehumidifying operation will be later described.

The control signal [x] obtained in this-manner corresponds to a calorie which the cabin thermal load requires, in the control process of controlling the cabin temperature T_{R} to the target set temperature T . Since the constants are selected in this s embodiment to satisfy the relation k>0 and τ>0, the greater the [x] value, the greater heating power is necessary when [x]>0. When [x]<0, on the other hand, the greater cooling power is necessary for the cabin thermal load with an increasing [-x] value.

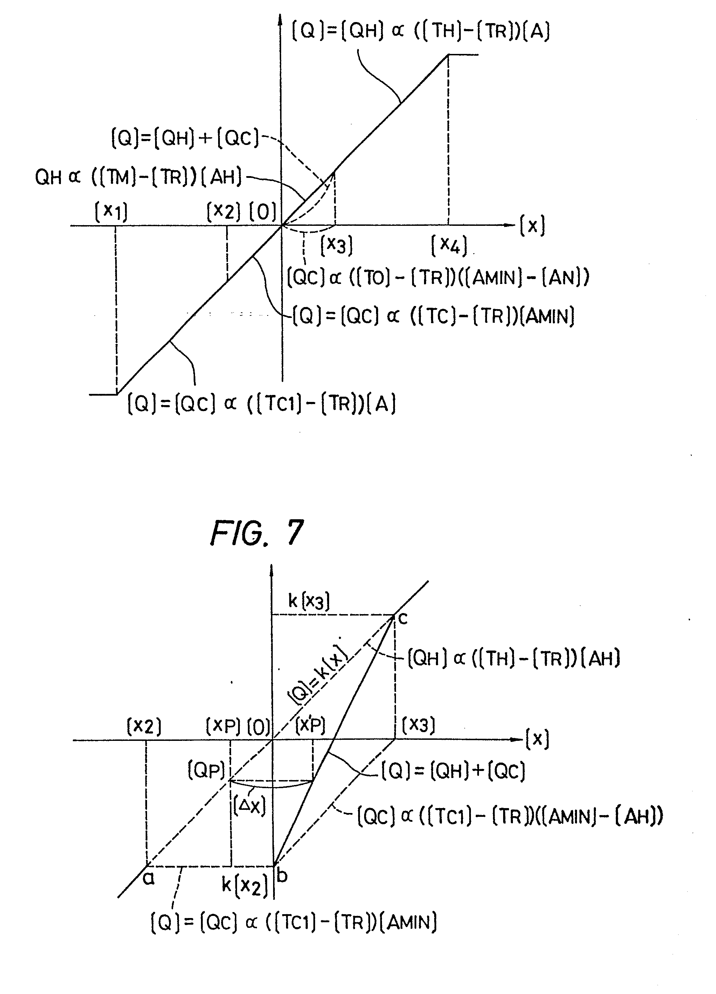

The operation of the air conditioning apparatus of this invention based upon the value of the control signal [x] will be explained with reference to Figure 4. The diagram shows the operating state of the heat exchange portion 1 with respect to the control signal [x] plotted on the abscissa.

The temperature controlling door target voltage [V_{T0}] with respect to the control signal [x] is obtained by calculation at the step 210. This target voltage [V_{T0}] is a primary formula relating to [x] within the range of x₃≧x≧0. When [x] is [0], [Vₜ₀] = [V_{T1}] and when [x] is a predetermined positive value [x₃], [V_{T0}] = [V_{T2}]. Here, [V_{T1}] corresponds to a voltage by the potentiometer 147 under the state where the temperature controlling door 142 closes the passage to the heater core 141 (when 6 is maximal), and [V_{T2}] corresponds to a voltage of the potentiometer 147 when the passage to the heater core 141 is fully open (when 6 = 0).

Next, the voltage V_{T} of the potentiometer 147 is read as the position signal of the temperature controlling door 142 at the step 222 of the interruption processing routine and is converted to a digital value [V_{T}] by the A/D convertor 21.

The step 220 first permits the following timer interruption. At the step 222, the content of the register that has been used in the main routine is temporarily shifted to other memory and is then returned to that register at the final step lest no problem occurs in the execution of the main routine.

At the next step 223, the target voltage [V_{TO}] and [V_{T}] ] are compared by the temperature controlling door position control circuit 244 to control the position of the temperature controlling door 142. In other words, [ΔV_{T}] = [V_{T0}] - [V_{T}] is calculated, and a control signal [T_{l]} which becomes a logic "1" when [ΔV_{T}]≧ [ΔV_{TP}] and "0" when [ΔVT]< [ΔV_{TP}] with respect to the predetermined value [ΔV_{TP}]>0, and a control signal [T₂], which becomes a logic "1" within the range [-ΔV_{TP}]≤[ΔV_{T}]≤[ΔV_{TP}] and "0" out of this range, are generated by control signal generation circuits 245, 246, respectively. When both control signals [T₁] and [T₂] are "I", the switching elements 233 and 234 are turned on and the current is applied to the electromagnetic valves 145 and 146. The current is not applied to these valves when the control signals are "0".

As described above, the temperature controlling door 142 is rotated in a direction which increases 8, when [ΔV_{T}]<[-ΔV_{TP}], and is rotated in a direction which decreases 6, when [ΔV_{T}]<[-ΔV_{TP}]. Withing the range of [-ΔV_{TP}] ≦ [ΔV_{T}] ≦ [ΔV_{TP}], that is, [V_{T0}]-[ΔV_{TP}]≦[_{V}T]≦[V_{T0}]+[ΔV_{TP}], the temperature controlling door 142 is at halt and the position θ of the temperature controlling door at this time corresponds to the target voltage [^{V}_{TO}].

Turning back to the step 214 of the main routine, the target temperature [T_{C0}] of the discharge air temperature T_{C} is determined by a discharge air temperature set circuit 247 in the following manner.

When [x]≦[x₂] with respect to a predetermined negative value [x₂] of [x], T_{C} becomes the possible lowest value [T_{cl}] (2.5°C in this embodiment) immediately before freezing of the surface of the evaporator and within the range of [x]≦~[x₂], [T_{C0}] becomes a value which is determined from a primary equation connecting two points [T_{cl}] and a predetermined value [T_{c2}] (25°C in this embodiment) at [x] = [0]. Incidentally, the range near [x] = [0] is a range is which the cabin thermal load requires neither heating power nor cooling power and the external temperature T₀ is close to the target set temperature Tₛ. It is hardly necessary to actuate the cooling means within this range; hence the temperature is set to [T_{c2 ]} =[Tₛ].

At the next step 215, the discharge air target temperature [T_{c0}] and the discharge air temperature [T_{c}] are compared with each other and the temperature difference [ΔT_{C}] = [T_{CO} ] - [T_{C} ] is calculated. A compressor operation signal generation circuit 248 generates the following compressor operation signal [C] on the basis of this value [ΔT_{C}]. That is, when [ΔT_{C}]≧[0], [C] becomes a logic "0" and when [ΔT_{C}] <[0], [C] becomes a logic "1". When the compressor control signal [C] is "1", the switching element 235 is turned on at the step 217 and the current is applied to the compressor relay 132b. The compressor relay 132b excites a magnet clutch 132a so that the compressor 132 is operated and the air passing through the evaporator 131 is cooled to lower the discharge air temperature T_{C}. As the discharge air temperature T drops, a state is finally reached where [ΔT_{C}]≧[0] and [C] = "0". At the final step 132 of this routine, the compressor 132 becomes therefore inoperative. As the compressor 132 repeats operation and non-operation in the manner described above, the discharge air temperature T_{c} is held close to the target temperature [T_{C0}] which is determined by the control signal [x]. Within the aforementioned range [x]≧0, however, the cabin thermal load requires the heating power and the target set temperature T_{S} is higher than the cabin external temperature TO (T_{S}>T₀). Moreover, T_{c0}>T_{c2}≒ Tₛ. Since the suction port door 111 sucks the external air, the temperature of the air sent to the evaporator 131 is close to the external temperature T₀. Accordingly, [ΔT_{c}]>0 even when the cooling means do not operate and the compressor 132 does not operate. Hence, [T_{c}] ≒ [T_{O}]. The air flow rate sent by the blower 121 to the evaporator 131 and the heater core 141 or the bypass 103, that is, the blower air flow rate A, is substantially proportional to the voltage V_{F} applied to the motor 122. The voltage to be applied to this motor 122 is controlled in the following manner. First, the target voltage [V_{F}] is calculated by a blower air flow rate calculation circuit 249 in accordance with the control signal [x] at the step 216. When [x]≦[x₁] and [x]≦[x₄] with [xₗ] and [x_{4]} representing predetermined negative and positive values of [x], respectively, the target voltage becomes a maximum value [V_{F1}] (12 V in this embodiment) and is controlled so that [V_{F}] becomes a minimum value [V_{F2}] (4 V in this embodiment) within a range of from the negative value [x₂] to a positive value [x₃]. Within the range of [x₁]≦[x]≦[x₂], [V_{F}] is determined by a primary formula connecting a point at which [V_{F}] becomes [V_{F2}] when [x₂] and a point at which it becomes [V_{F1}] when [x₃].

The target value [V_{F}] determined above is converted to an analog voltage V_{FS} by a D/A convertor 329 at the step 217, and the driver 123 which is controlled by this voltage V_{FS} drives the motor 122.

When the control signal [x] is below [x₁], the blower air flow rate A becomes maximal A , and max decreases substantially linearly between the maximum A and the minimum A. between [x₁] and [x₂]. max min 1 2 The blower air flow rate A is kept at the minimum Aₘᵢₙ between [x₂] and [x₃] and increases linearly from the minimum A to the maximum A between min max [x₃] and [x₄]. It becomes the maximum Aₘₐₓ above [x₄].

Besides the operations described above, the suction port door 111 and the mode door 151 are also controlled in accordance with the value of the control signal [x] during the main routine.

In the control of the suction port door 111, a suction port door control circuit 250 generates a control signal [I₁], which becomes a logic "1" when [x]≦ [0] and "0" when [x]≧[0] and a control signal [I₂], which becomes "1" when [x]≦[x₅] and "0" when [x)≧[x₅], at the step 211. Here, [x₅] is a negative value satisfying the relation [x₁]<[x₅]<[x₂].

When the control signals [I₁] and [I₂] and "1", the current is applied to the switching elements 231 and 232 at the step 217 and to the electromagnetic valves 114 and 115, but is not applied to the electromagnetic valves 114 and 115 when the control signals are "0".

When the control signal is [x]≦[x₅], both signal [T₁] and [I₂] become "1" as described already, so that the current is applied to the electromagnetic valves 114 and 115 and the suction door 111 sucks the internal air by the operation of the actuator 112. When [x]≧[0], both signals [I₁] and [I₂] are "0" and the suction door 111 is sucked by the return spring 113 and sucks the external air.

When [x₅]≤[x]≤[0], [I₁] is "1" while [I₂] is "0", so that the suction door lll is placed at the intermediate position and sucks both internal and external air.

Similarly, the mode door 151 is also controlled by the control signal [x]. The mode door 115 is controlled in such a manner that it blows upward when the value of [x] is smaller than [x₆], blows downward when [x] is greater than [x₇] and blows both upward and downward when [x] is between [x₆] and [x₇], and [x₆] and [x₇] are set so as to satisfy the relation [0]<[x₆]<x₇]<[x₃]. A mode door control circuit 251 generates, as the practical control signals, a control signal [0₁] which becomes "1" at [x] and [x₇] and "0" when [x]≧[x₇] and a control signal [0₂] which becomes "1" when [x]<[x₆] and "0" when [x]≧[x₆], at the step 212.

The mode door 151 is driven in the following manner at the step 217 on the basis of the values of the control signals [0₁] and [0₂].

When [x]<[x₆], both [0₁ ] and [0₂] are "1" and the switching elements 236, 237 are turned on, so that the current is applied to the electromagnetic valves 154, 155 and the mode door 151 becomes the upward blow mode by the actuator 152.

When [x]>[x₇], both [0₁] and [0₂] are "0" and no current is applied to the electromagnetic valves 236, 237, so that the mode door 151 is in the downward blow mode by the return spring 153.

When [x6]≦[x]≦[x₇], [0₁] is "1" and [0₂] is "0". Accordingly, the current is applied to the electromagnetic valve 154 but not to the electromagnetic valve 155, so that the mode door 151 is situated at the intermediate position and in the upward and downward blow mode.

Figure 5 shows the heat radiation quantity Q into the cabin due to the operation described above (the quantity Q becoming negative in the cooling range of [x]<0). [x]<[x₁] represents the time of maximum cooling and [x]>[x₄] represents the time of maximum heating. The range [xₗ]<[x]<[x_{4]} is a range in which the heat radiation quantity Q is linearly controlled.

The heating quantity [Q] is the sum of the calorie [Q_{H}] of the air which is heated by the heater core 141 and the calorie [Q _{c} ] of the air which passes through the evaporator 131 and then through the bypass 103.

In order to have the fundamental characteristics easily understood, the cabin temperature [T_{R}] is hereby assumed to be kept at the target set temperature [Tₛ] as the base point.

Assume that the air temperature immediately after passing through the heater core 141 is [T_{H]} and the air flow rate of the blower flow rate [A] that passes through the heater core 141 is [A_{H}]; then, the following relation can be established:

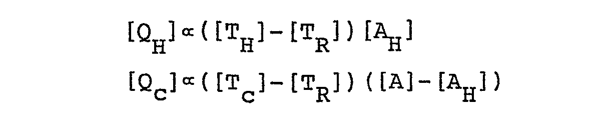

In the region of [x]≧0, the cooling means do not operate as described previously and the heat exchange portion I sucks the external air; hence, there is a relation T_{c} ≒ external temperature T_{O}≦T_{R}≦T_{S}.

Within the range of [x₃]≧[x][O], the following equation can be given:

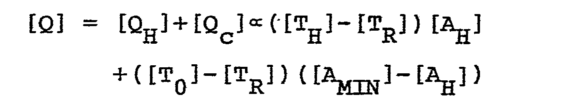

Provided that the heating means have sufficient capacity, ([T_{H}]-[T_{R}]) is substantially constant and the air flow rate [A_{H}] passing through the heater core 141 increases linearly from 0 to [A_{MIN}]. Accordingly, [Q_{H}] linearly increases from 0 with an increasing [x]. In the proximity of [x] = [0], [T_{O}]≒ [T_{R}], hence, [Q_{C}]≒ 0. When [x] - [x₃], [A_{H}] = [A_{MIN}] and hence, [Q_{c}] = 0. When [x₃]≥x≥0, [T_{O}]≤[T_{R}] and hence, [Q_{C}]≤0.

Within the range of [x]≧[x₃], [A_{H}]= [A] and hence, [Q] = [Q_{H}]∝([T_{H}]-[T_{R}])[A]. Since ([TH] - [T_{R}]) is constant and [A] changes linearly with respect to [x], [Q] increases further linearly with an increasing [x].

Within the range of [x]<[0], [A_{H}] = 0 and the discharge air temperature [T_{c]} ; target discharge air temperature [T_{c0}] provided that the cooling means have sufficient capacity.

Within the range of [0]>[x]≥[x₂], [Q] = [Q]^{∝} ([T_{C}]-[T_{R}])[A_{MIN}], and [A_{MIN}] is constant. As [x] increases in the negative direction, (T_{c} - T_{R}) changes linearly from 0 to [T_{cl}] - [T_{R}]. Hence, [Q] as the cooling power increases linearly from 0 as [x] increases in the negative direction.

Within the range of [x₂]≧[x]≧[x₁], [A] changes linearly with respect to [x] while [T_{C}] = [T_{R}] = ([T_{c1}] - [_{TR]}) assuming a predetermined negative value. As [x] increases in the negative direction, [Q] as the cooling power further increases proportionally.

Thus, it has been confirmed that Q increases continuously, monotonously and uniformly with respect to [x] as illustrated in Figure 5.

Next, the dehumidifying function which is used in the rainy season or the like will be explained.

A dehumidifying switch operation signal V_{DEH} from the operation portion 3 reads the dehumidifying state at the manual switch read step 225 of the micro-computer interruption processing routine.

At the dehumidifying switch timer processing step 226, the target discharge air temperature [T_{CO}] at the step 214 of the main routine is fixed to the lowest possible temperature [T_{C1}] as shown in Figure 4 for a peirod of thime which is determined by the timer 244 at the dehymidifying switch timer processing step 226, e.g., for 10 minutes in this embodiment, so that the air temperature immediately after passing through the evaporator 131 reaches the lowest possible temperature [T_{cl}] immediately before freezing, e.g. 2.5°C in this embodiment.

Under this state, the air is cooled while passing through the evaporator 131 and is simultaneously dehymidified, and is thereafter blown out into the cabin.

When the apparatus of the present invention is under the dehumidifying state, the characteristics of Q supplied by the present apparatus to the cabin thermal load change from the characteristics shown in Figure 5 to those shown in Figure 7 (curves a-b-c). In other words, within the range of [a]≧[x]≧[x₂], [Q] = [Q_{C}]∝]-[TC₁])[A_{MIN}], and within the range of [x₃]≧[x]≧[0], [Q] = [Q_{H}]+[QC_{]}∝ ([T_{H}-[T_{R}]) [A_{H}] + ([T_{C1}] [T_{R}]) ([A_{MIN}]- [A_{H}]).

When the dehumidifying switch 32 is pushed under the state where the apparatus of the invention is operating at the point of [x] - [x_{P}] and [x₃]≧[x_{P}]≧ [x_{2]}, the calorie [Q] described above changes from [Qₚ] ] to [kₓ₂] so that the heating power becomes temporarily insufficient. Here, k is a mean proportional coefficient between [Q] and [x] in [x₃]≧[x]≧ [x₂] in the characteristics shown in Figure 5 and [Q_{C}] is neglected because it is small when [x_{3]}≧x≧[0]. In other words, when [x₃]≧[x]≧[0], Q ≒ Q_{H}. The insufficiency of this heating power settle in course of time to a point [x_{p'}] where the original calorie [Qₚ] ] is provided, as the value [x] gradually increases by the negative feedback control described with reference to Figure 1. In the mean time, the cabin temperature [T_{R}] drops temporarily.

After the dehumidifying state continues for a predetermined period of time, the discharge air temperature T_{c} rises, on the contrary, so that the heating power becomes excessive temporarily and T_{R} rises in the meantime. In order to mitigate this temporary temperature change, a temporary compensation quantity [Ax] is added to the control signal [x] at the next step 209 when the dehumidifying operation is started or finished. When this apparatus enters the dehumidifying state at the point where [x] = [xₚ] in Figure 7, the control signal [x] may be changed to [x_{p'}] in order to secure a heating quantity Qp which is the same as the original quantity. In other words, the object can be accomplished by adding [Δx], which satisfies the equation [x_{p'}] = [xₚ] ] + [Ax], to the value [x] as temporary compensation.

Since Qₚ can be expressed as Qₚ = k[xₚ], the line b-c in Figure 7 can be expressed as follows; 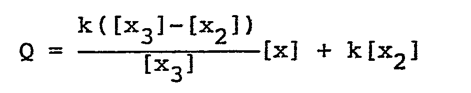 hence, 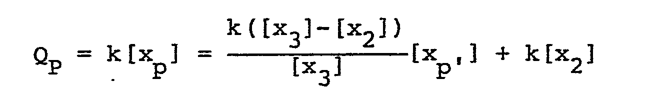 Hence, 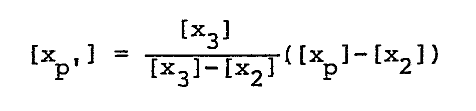 Therefore,

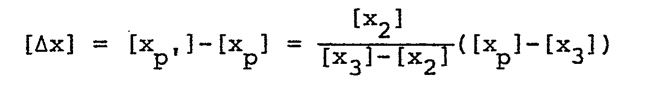

When the dehumidifying state is completed, compensation may be carried out in the reverse manner as above. That is, calculation is made in the following manner using

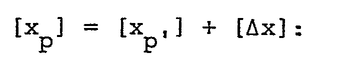

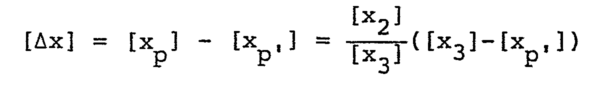

As is obvious from the foregoing description, correction of [xₚ] ] + [Ax] is effective only when [x₃]≧[xₚ]≧[x₂ ] and correction of [xp] + [Δx] is effective only when [x₃][x_{p'}]≧[0], and correction is made only these times at the step 209.

In other words, the fact that the correction is effective means that dehumidification is strengthened.

Incidentally, it is not the case that the air conditioning apparatus of this invention does not perform the dehumidifying operation only when the dehumidifying switch is pushed.

Dehumidification is effect to its full capacity within the range of [x₂]≧[x] and is effected while leaving its capacity to some extents within the range of [0]≧[x]≧[x₂].

Next, the front glass air blow operation, which blows the discharge air from the air blow port 106 to the front windbreak glass, will be explained.

A front glass air blow operation signal V_{DEF} from the operation portion 3 reads the state of the front glass by the interruption routine at the step 225. When the air is blown to the front glass, a control signal [D] from a flip-flop 252 is set to a logic "1" at the step 213 of the main routine, and the switching element 238 is turned on at the step 217, feeding the current to the electromagnetic valve 159. The air blow port change door 156 is then actuated by the negative pressure actuator 157. The front glass air blow operation, which blows the air from the deaf outlet 106 to the front glass, is released when the switch 33 is again operated.

Hereinafter, an example of the practical operation of the air conditioning apparatus of the present invention will be described. It will be assumed that the apparatus of the invention is operated at the external temperature 15°C in the rainy season and the mean internal temperature [T_{R}] inside the cabin is kept at the target set temperature [T_{S}]= 23°C during driving. The internal air receives some calorie from the air conditioning apparatus of the invention and keeps the state described above. In this state, the control signal [x] is between [0] and [x₃] in view of the capacity of the heating means. 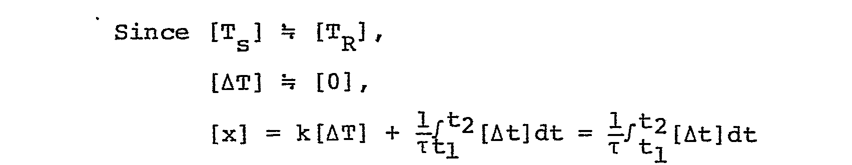 where k and 1/_{T} correspond to K₁ and K₂ in the description with reference to Figure 1, respectively.

The integration time of the integration item of the formula above is the time from the point t₁ when the apparatus of the invention is actuated to the present time t₂ and the control signal [x] at this present time is cumulation of the temperature difference [AT] up to this time. Hence, [x] remains substantially constant.

Since [x]>0, both signals [I₁] and [I₂] are "0". Accordingly, the suction port door 111 is situated at the position where it sucks the external air, by the return spring 113.

The blower control voltage V_{FS} is the lowest and the air flow rate A of the blower is the minimum Aₘᵢₙ.

The target value [T_{c0}] of the discharge air temperature [T_{c}] immediately after passing through the evaporator 131 is at least 25°C and since the external air is introduced, [T_{c}] ] is sufficiently lower than [T_{c0}]. For this reason, the compressor 132 does not operate.

Three kinds of combinations are possible between the control signals [0₁] and [0₂] of the mode door 151 depending upon the value of [x], and it will be hereby assumed that [0₁] is "1" and [0₂] is "0" and the air is blown into the cabin from the upper and lower blow ports 104 and 105.

The air sucked from outside the cabin is not subjected to heat exchange at all in the evaporator 131 but is divided into two portions by the temperature controlling door 142. One of the portions is sent to the heater core 141 and is heated while the other by-passes the heater core 141 and is sent to the blow port. From thence, the air is again divided into two portions and is blown into the cabin from the upper and lower blow ports 104 and 105. The air that is blown from both blow ports carries the heating power to the air inside the cabin which corresponds as a whole to that shown in Figure 5 and the calorie is equal to the calorie that escapes from inside the cabin to the outside.

The wind, that by-passes the heater core, has a temperature substantially equal to the external temperature outside the cabin. Since the heat exchange portion 1 is constructed so that this wind can more easily flow out from the upper blow port 104, the temeprature of the wind from the upper blow port 104 is lower than the temperature of the wind flowing out from the lower blow port 105. This keeps the temperature distribution of the cabin in the state where the ceiling portion inside the cabin is cooler than the floor portion.

It will be now assumed that the target temperature Tₛ is raised by 2 degress at a time t₂; then, [ΔT] increases quickly from [0] to [2] and [x] increases by

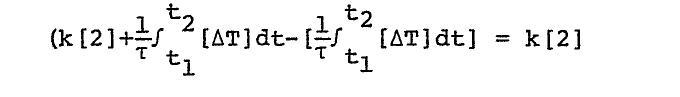

No change occurs in both [I₁] and [I₂] and the air is introduced from outside the cabin. If

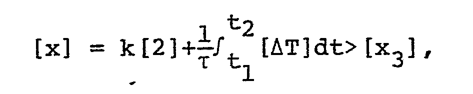

[_{VFS]} increases and the blower air flow rate A also increases. Then, the temperature controlling door 142 rotates in a direction which decreases θ and increases the air flow rate of the portion of the blower air flow that passes the heater core 141. However, the compressor 132 does not yet operate.

[0₂] still remains "0" and [0₁] changes from "1" to "0" depending upon the value of [x]; hence, the blow mode changes from the upper and lower blow to the lower blow. Accordingly, the calorie Q carried into the cabin increases by the increment k[2] of [x] as shown in Figure 5.

Since a calorie greater than the calorie under the steady state before t₂ is rapidly supplied into the cabin, the internal air is heated and the internal temperature T_{R} rises gradually. As T_{R} rises, [AT] becomes smaller and k[AT] also becomes smaller. Since the integration item is as follows, on the other hand, 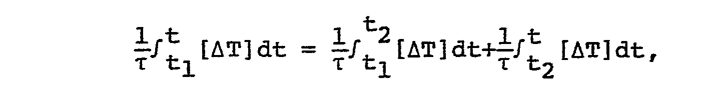 the increment becomes 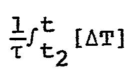 dt.

As has been explained previously with reference to Figure 6, however, the sum [x] of the two described above repeats pulsation of increase and decrease with the passage of time but the pulsation attenuates and converges to a predetermined value.

At the time when [x] converges to a predetermined value, 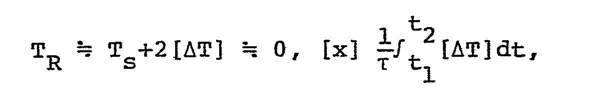 the heating quantity of the internal air of the cabin becomes greater than that under the steady state at the point t₂, and the calorie escaping from inside the cabin to the outside increases in a quantity corresponding to the rise of the internal temperature T_{R} by two degrees, thereby establishing the state where both calories are equal to each other.

Next, it will be assumed that the dehumidifying switch 32 is operated at the point t₂ without changing the target temperature Tₛ.

This operation sets the target discharge air temperature [T_{c0}] to 2.5°C. As a result, the value of [ΔT_{C}]= [T_{c0}] - [T_{c}] ] becomes a large negative value and the compressor 132 is driven. Thereafter, the compressor 132 repeats operation and non-operation as described already and the discharge air temperature is kept near 2.5°C. In other words, the air passing through the evaporator 131 is rapidly cooled to about 2.5°C and is dehumidified at this time. On the other hand, the temporary compensation quantity [Δx] is calculated on the basis of 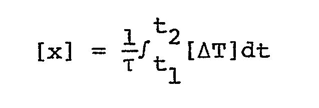 as described already, and temporary addition is effected to provide

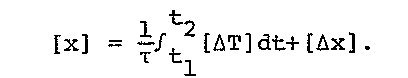

Accordingly, the temperature controlling door 142 moves in a distance corresponding to the increase of [x] to [Ax] and the air flow rate [A_{H}] passing through the heater core 141 increases. On the other hand, the bypass quantity of the air through the heater core 141 among the air cooled down to 2.5°C decreases. The temporary compensation quantity [Ax] is calculated so as to increase the heating power in match with the increase in the cooling power. Accordingly, hardly any change occurs in the calorie supplied by the apparatus of the invention to the internal air of the cabin and hence, hardly any change occurs in the internal temperature T_{R} of the cabin. However, since the air which is much more dehumidified than before is supplied, the humidity inside the cabin drops gradually.

Figure 6 shows another embodiment of the present invention and corresponds to Figure 4 of the foregoing description. Only the portions different from Figure 4 are shown in Figure 6.

In Figure 6, the difference from Figure 4 is that the lower change points of the target discharge air temperature [T_{c0}] and temperature controlling door target position [V_{T0}] are changed from [x₂] and [x₃] to [x₂,] and [x₃,], respectively. It is qualitatively obvious without the necessity of detailed description that this change does not spoil at all the continuous, monotonous and uniform increasing characteristics of the heat radiation quantity Q with respect to x.

According to the characteristic diagram shown in Figure 6, the lower change points of the target discharge air temperature [T_{c0}] and temperature controlling door target position [V_{T0}] are changed to [x_{2'}] and [x₃,], respectively. This arrangement eliminates the problem that the chill weak wind will drop down to the knee of a passenger and lets him feel uneasy if the discharge air temperature is reduced down to the lowest value T_{cl} while keeping the blower air flow rate A at the lowest level A_{MIN}, and that if the hot air is entirely blown out from the lower blow port while keeping A at Aₘᵢₙ, on the other hand, only the feet of the passenger will be heated so that he will also feel uneasy.

In accordance with the present invention, the air conditioning apparatus is equipped with automatic temperature controlling function which operates the cooling means only when the thermal load of the cabin requires the cooling power and only when the passenger desires the dehumidification. Accordingly, the operation range of the cooling means is reduced much more remarkably than in the conventional apparatus and the power consumption can be drastically reduced.

## Claims

1. In an air conditioning method for a car which makes use of cooling means and heating means and automatically controls the internal temperature of a cabin to a target set temperature by controlling the heat receiving quantity of the air passing through both of said means by a temperature controlling door, the improvement wherein a calorie required by a thermal load inside the cabin is judged, the function of said cooling means is stopped and the heating power of said heating means is controlled to a necessary heating quantity when it is judged necessary to heat inside the cabin as a result of the judgement, and the function of said heating means is stopped and the cooling power of said cooling means is controlled to a necessary cooling quantity when it is judged necessary to cool inside the cabin as a result of the judgement.

2. In an air conditioning apparatus for a car which makes use of cooling means and heating means and automatically controls the internal temperature of a cabin to a target set temperature by controlling the heat receiving quantity of the air passing through both of said means by a temperature controlling door, the improvement comprising means for judging the calorie required by a thermal load inside a cabin; and control means for stopping the function of said cooling means when heating power is judged necessary by said judging means and controlling the heating power of said heating means in accordance with the heating power required by said judging means, and for stopping the function of said heating means when the cooling power is judged necessary by said judging means and controlling the cooling power of said cooling means in accordance with the cooling power required by said judging means.

3. The air conditioning apparatus for a car as defined in claim 2 wherein said control means increases monotonously and uniformly the flow rate of the air passing through said heating means in accordance with said required heating power.

4. The air conditioning apparatus for a car as defined in claim 3 wherein said control means sets a first set value smaller than the maximum heating value; when said required heating power is smaller than said first set value, said control means controls said temperature controlling door so that the flow rate of the air passing through said heating means increases gradually to 100% in accordance with the increase in said required heating power while either fixing the flow rate of the air passing through said air conditioning apparatus at the minimum or increasing gradually the flow rate to an intermediate value; and when said required heating power is higher than said first set value, said control means keeps the flow rate of the air passing through said heating means at 100% and controls and increases gradually the flow rate of the air passing through said air conditioning apparatus to the maximum in accordance with the increase in said required heating power so that the flow rate passing through said heating means becomes mototonous and uniform.

5. The air conditioning apparatus for a car as defined in claim 2 wherein said control means has'a target value of the temperature of the air immediately after passing through said cooling means, increases monotonously and uniformly the flow rate of the air passing through said cooling means in accordance with said required cooling power and descreases monotonously and uniformly said target value.

6. The air conditioning apparatus for a car as defined in claim 5 wherein said control means sets a second set value smaller than the maximum cooling power; when said required cooling power is smaller than said second set value, said control means gradually decreases gradually said target air temperature to the possible lowest value in accordance with the increase in said required cooling power while either fixing the flow rate of the air passing through said air conditioning apparatus at the minimum or increasing gradually the flow rate to an intermediate value; and when said required cooling power is greater than said second set value, said control means keeps said target air temperature at the possible lowest value, increases gradually the flow rate of the air passing through said air conditioning apparatus to the maximum in accordance with the increase in said required cooling power and controls monotonously and uniformly the calorie which the air passing through said cooling means is deprived of.

7. The air conditioning apparatus for a car as defined in claim 2 or 5 which further includes means for manually controlling said cooling means and when said manual means is operated, said control means operates said cooling means so as to let it reduce said target air temperature to the possible lowest value.

8. The air conditioning apparatus for a car as defined in claim 7 wherein said manual means automatically releases the manual operation for said cooling means when a predetermined period of time has passed after the start of its operation.

9. The air conditioning apparatus for a car as defined in claim 7 wherein said manual means immediately requires said judging means to increase predetermined heating power upon operation thereof and when said manual means returns to the automatic control mode, said manual means immediately requires said judging means to increase predetermined cooling power.

10. The air conditioning apparatus for a car as defined in claim 8 wherein said manual means immediately requires said judging means to increase predetermined heating power upon operation thereof and when said manual means return to the automatic control mode, said manual means immediately requires said judging means to increase predetermined cooling power.
